# EUROPÄISCHE PATENTSCHRIFT

(11) **EP 3 548 206 B1**
(45) Veröffentlichungstag und Bekanntmachung des Hinweises auf die Patenterteilung: **17.06.2020**
(21) Anmeldenummer: 17821792.3
(22) Anmeldetag: 24.11.2017
(51) Int. Cl.: B22D 11/06

(54) **SPANNSYSTEM ZUM BEFESTIGEN EINES KÜHLBLOCKS AN EINEM UMLAUFENDEN TRAGELEMENT EINER RAUPENGIESSMASCHINE, UND VERFAHREN ZUM BEFESTIGEN ODER LÖSEN EINES KÜHLBLOCKS AN ODER VON EINEM UMLAUFENDEN TRAGELEMENT EINER RAUPENGIESSMASCHINE**
CLAMPING SYSTEM FOR FASTENING A COOLING UNIT TO AN ENCIRCLING SUPPORTING ELEMENT OF A CATERPILLAR TYPE CASTING MACHINE, AND METHOD FOR FASTENING OR RELEASING A COOLING UNIT TO OR FROM AN ENCIRCLING SUPPORTING ELEMENT OF A CATERPILLAR TYPE CASTING MACHINE
SYSTÈME DE SERRAGE PERMETTANT DE FIXER UN BLOC RÉFRIGÉRANT À UN ÉLÉMENT DE SUPPORT PÉRIPHÉRIQUE D'UNE MACHINE DE COULÉE SUR CHENILLES ET PROCÉDÉ DE FIXATION OU DE LIBÉRATION D'UN BLOC RÉFRIGÉRANT VIS À VIS D'UN ÉLÉMENT DE SUPPORT PÉRIPHÉRIQUE D'UNE MACHINE DE COULÉE SUR CHENILLES

(30) Priorität: 29.11.2016 DE 102016223719
(43) Veröffentlichungstag der Anmeldung: 09.10.2019
(73) Patentinhaber: SMS Group GmbH, 40237 Düsseldorf (DE)
(72) Erfinder: BÖCKING, Sebastian, 57072 Siegen (DE); FICK, Guido, 57223 Kreuztal (DE)
(74) Vertreter: Kross, Ulrich
(86) Internationale Anmeldenummer: PCT/EP2017/080333
(87) Internationale Veröffentlichungsnummer: WO 2018/099815

(56) Entgegenhaltungen:
- EP-A2- 0 276 955
- EP-B1- 1 704 005
- WO-A1-95/27145

## Beschreibung

Die Erfindung betrifft ein Spannsystem zum Befestigen eines Kühlblocks an einem umlaufenden Tragelement einer Raupengießmaschine nach dem Oberbegriff von Anspruch 1, ein entsprechendes Verfahren nach dem Oberbegriff von Anspruch 13, und ein Verfahren zum Lösen eines Kühlblocks von einem umlaufenden Tragelement einer Raupengießmaschine nach dem Oberbegriff von Anspruch 14.

Nach dem Stand der Technik sind insbesondere zur Herstellung von Aluminiumlegierungen Horizontal-Blockgießmaschinen bekannt, die nach Art einer umlaufenden Raupengießmaschine funktionieren. Eine solche Gießmaschine ist z.B. aus EP 1 704 005 B1 bekannt. Hierbei bilden die Kühlelemente der Gießmaschine auf den geraden Abschnitten bzw. Trums von gegenüberliegend zueinander angeordneten Gießraupen die Wand einer bewegten Gießform. Die Gießraupen bestehen jeweils aus einer Vielzahl von endlos miteinander verbundenen Kühlblöcken, die entlang der Umlaufbahnen der Raupen transportiert werden. Zu diesem Zweck werden Blöcke bestehend aus Blockelementen, die auf Rahmen federbefestigt sind, auf Ketten aufgesetzt. Dabei werden die Rahmen mit den Blöcken mittels stationärer Magnete dort auf den Ketten gehalten, wo sie wegen der Schwerkraft ansonsten herunterfallen würden. Die Kettenglieder sind an ihren Verbindungsstellen mit Rollen versehen, welche auf Führungsbahnen abrollen. Die Verwendung von Permanentmagneten zum Halten der Kühlblöcke auf den Tragelementen unterliegt dem Nachteil eines aufwändigen Handlings, falls die Kühlblöcke von den Tragelementen z.B. für Wartungszwecke oder dergleichen gelöst werden sollen.

Aus der EP 1 704 005 B1 ist auch bekannt, dass alternativ zu den Permanentmagneten Elektromagnete eingesetzt werden, um die Kühlblöcke in Richtung der Tragelemente bzw. einer Umlaufbahn einer Horizontal-Blockgießmaschine zu ziehen und entsprechend daran zu halten. Die Verwendung von solchen Elektromagneten unterliegt dem Nachteil, dass die Kühlblöcke abfallen, sobald die Stromversorgung unterbrochen ist.

Aus EP 0 276 955 A1 ist eine Gießmaschine bekannt, bei der Formblöcke an zugeordneten Transportmitteln jeweils durch verschwenkbare Klammern festgeklemmt bzw. damit verbunden werden, nach Art eines Hebelsystems. Diese Klammern sind an den Transportmitteln außen gelenkig angebracht.

Eine weitere Blockgießmaschine, bei der eine bewegte Form zwischen umlaufenden und einander gegenüberliegend angeordneten Raupen gebildet wird, ist aus WO 95/27145 bekannt. Hierin ist ein gattungsgemäßes Spannsystem nach dem Oberbegriff von Anspruch 1 gezeigt, bei dem ein Verbindungselement, das in seiner Längsrichtung durch eine Feder vorgespannt ist, und Klemmmittel, durch die ein Kühlblock an einem Tragelement befestigt werden kann, vorgesehen sind. Im Einzelnen sind in jedem Kühlblock eine Mehrzahl von Feder-vorgespannten Bolzenelementen eingebracht. Die Klemmmittel sind jeweils an einem zugeordneten Tragelement vorgesehen, und in Form einer verschwenkbaren Klaue ausgebildet. Durch ein Verschwenken der Klauen werden die freien Enden der Bolzenelemente ergriffen, wodurch das Verspannen eines Kühlblocks mit einem Tragelement erfolgt. Dieser Befestigungsmechanismus gemäß WO 95/27145 ist mechanisch aufwändig, und unterliegt dem weiteren Nachteil, dass die Bolzenelemente, die aus den Kühlblöcken herausragen, beschädigt werden können, insbesondere wenn die Kühlblöcke von den Tragelementen demontiert sind und z.B. in einem Zwischenlager aufbewahrt werden.

Entsprechend liegt der Erfindung die Aufgabe zugrunde, ein Spannsystem und ein entsprechendes Verfahren zu schaffen, mit dem ein Befestigen/Lösen eines Kühlblocks an/von einem umlaufenden Tragelement einer Raupengießmaschine in einfacher Weise optimiert ist und insbesondere ohne kontinuierliche Energiezufuhr von außen funktioniert.

Diese Aufgabe wird durch ein Spannsystem mit den in Anspruch 1 angegebenen Merkmalen, durch ein Verfahren mit den Merkmalen gemäß Anspruch 13, und durch ein Verfahren mit den Merkmalen gemäß Anspruch 14 gelöst. Vorteilhafte Weiterbildungen der Erfindung sind in den abhängigen Ansprüchen definiert.

Ein Spannsystem nach der vorliegenden Erfindung dient dazu, einen Kühlblock an einem umlaufenden Tragelement einer Raupengießmaschine zu befestigen bzw. zu verspannen, und umfasst zumindest ein Verbindungselement, das in seiner Längsrichtung durch eine Feder vorgespannt ist, und Klemmmittel, durch die der Kühlblock an dem Tragelement befestigt werden kann. Das Verbindungselement ist innerhalb des Tragelements in Richtung seiner Längsachse verschieblich gelagert aufgenommen. Die Klemmmittel sind durch einen an einer oberen Stirnseite des Verbindungselements vorgesehenen Kopf und eine in Wechselwirkung damit bringbare Ausnehmung, die an oder in dem Kühlblock vorgesehen ist, gebildet. Das Verbindungselement ist mittels der Feder zum Tragelement hin vorgespannt und wird dadurch in eine Klemmposition überführt. In dieser Klemmposition wird der Kühlblock, wenn der Kopf des Verbindungselements sich mit der an oder in dem Kühlblock vorgesehenen Ausnehmung in Eingriff befindet, selbsttätig mit dem Tragelement verspannt.

In gleicher Weise sieht die Erfindung ein Verfahren zum Befestigen eines Kühlblocks an einem umlaufenden Tragelement einer Raupengießmaschine vor, wobei der Kühlblock an dem Tragelement durch zumindest ein Verbindungselement befestigt wird, das innerhalb des Tragelements in Richtung seiner Längsachse verschieblich gelagert aufgenommen ist und in seiner Längsrichtung durch eine Feder vorgespannt ist. Das Verfahren sieht hierbei vor, dass ein an einer oberen Stirnseite des Verbindungselements vorgesehener Kopf in Eingriff mit einer Ausnehmung gebracht wird, die an oder in dem Kühlblock vorgesehenen ist. Hierbei ist das Verbindungselement mittels der Feder zum Tragelement hin vorgespannt und wird dadurch in Folge einer Verschiebung in Richtung seiner Längsachse in eine Klemmposition überführt, in welcher der Kühlblock, wenn der Kopf des Verbindungselements sich mit der an oder in dem Kühlblock vorgesehenen Ausnehmung in Eingriff befindet, selbsttätig mit dem Tragelement verspannt wird.

Der Erfindung liegt die wesentliche Erkenntnis zugrunde, dass ein Befestigen eines Kühlblocks an einem umlaufenden Tragelement einer Raupengießmaschine in mechanisch einfacher Weise dadurch funktioniert, dass das längliche Verbindungselement, wenn sein Kopf sich in Eingriff mit der an oder in dem Kühlblock vorgesehenen Ausnehmung befindet, durch die Feder-Vorspannung selbsttätig bzw. "automatisch" in Richtung seiner Längsachse in die Klemmposition überführt wird, und dadurch ein Verspannen des Kühlblocks mit dem Tragelement erfolgt. In dieser Weise ist das Spannsystem robust und versagenssicher. Hierbei ist auch von Vorteil, dass das Verbindungselement, zusammen mit der Feder zur Gewährleistung der besagten Feder-Vorspannung, nicht an oder in dem Kühlblock angeordnet ist, so dass eine Handhabung von demontierten Kühlblöcken, z.B. zu Wartungszwecken oder dergleichen, wesentlich vereinfacht ist und somit auch die Gefahr einer Beschädigung von herausstehenden Bolzenelementen vermieden wird.

In vorteilhafter Weiterbildung der Erfindung weist die Ausnehmung an oder in dem Kühlblock eine seitliche Öffnung auf. Diese seitliche Öffnung dient zu dem Zweck, dass der Kopf des Verbindungselements hierdurch in die Ausnehmung eingebracht werden kann, wenn der Kühlblock an dem Tragelement montiert wird, bevor das Verspannen des Verbindungselements erfolgt. In gleicher Weise kann der Kopf des Verbindungselements auch wieder aus der seitlichen Öffnung der Ausnehmung herausgeführt werden, wenn die Vorspannung des Verbindungselements aufgehoben ist, zwecks einer Demontage des Kühlblocks von dem Tragelement.

In vorteilhafter Weiterbildung der Erfindung ist an dem Kühlblock, nämlich an einer Seite gegenüberliegend zum Tragelement, zumindest eine Zusatzplatte angebracht, in der die Ausnehmung ausgebildet ist. Dies führt zu dem Vorteil, dass der Körper des Kühlblocks als solcher unverändert bleibt, und somit dessen Kühlkapazität auch nicht vermindert wird. Zweckmäßigerweise kann die Ausnehmung in Form einer Schwalbenschwanz-Nut ausgebildet sein, wobei der Kopf des Verbindungselements komplementär zu dieser Schwalbenschwanz-Nut geformt ist. Eine solche Formgebung der Ausnehmung - und komplementär dazu des Kopfes des Verbindungselements - gewährleistet in einfacher und mechanisch robuster Weise ein raumsparendes Verklemmen des Kopfes mit der Ausnehmung, und in gleicher Weise auch ein klemmfreies Lösen des Kopfes von der Ausnehmung, falls die Vorspannung des Verbindungselements aufgehoben wird und damit eine Demontage des Kühlblocks von dem Tragelement möglich ist.

In vorteilhafter Weiterbildung der Erfindung kann innerhalb des Tragelements eine insbesondere zylindrische Vertiefung ausgebildet sein, in der das Verbindungselement in Richtung seiner Längsachse verschieblich gelagert und zusammen mit der Feder aufgenommen ist. Wie vorstehend bereits erläutert, führt die Aufnahme bzw. Lagerung des Verbindungselements innerhalb des Tragelements zu dem Vorteil, dass der Kühlblock als solcher bezüglich seiner Kühlkapazität nicht beeinträchtigt wird. Hiermit einher geht auch der Vorteil, dass der Kühlblock (weil daran bzw. darin das Verbindungselement nicht gelagert aufgenommen ist) sich einfacher und ohne Risiko einer Beschädigung lagern lässt, wenn der Kühlblock z.B. zu Wartungszwecken von der Raupengießmaschine demontiert ist.

In vorteilhafter Weiterbildung der Erfindung kann an oder in dem Tragelement eine Löseeinrichtung vorgesehen sein, mittels der das Verbindungselement entgegen seiner Feder-Vorspannung in eine Löseposition bewegbar ist. In dieser Löseposition entsteht zwischen dem Kopf des Verbindungselements und der Ausnehmung Spiel, so dass der Kühlblock von dem Tragelement demontiert werden kann. Im Zuge einer solchen Demontage des Tragelements wird dann der Kopf des Verbindungselements aus der Ausnehmung, die an oder in dem Kühlblock vorgesehen ist, herausgehoben bzw. ausgebracht, zwecks einer Trennung des Kühlblocks von dem Tragelement.

Die besagte Löseeinrichtung kann rein mechanisch funktionieren, wobei ein Zusatzelement in Kontakt mit einem Fußabschnitt an einer unteren Stirnseite des Verbindungselements gebracht wird, um dadurch das Verbindungselement in seine Löseposition zu überführen. Beispielsweise ist das Zusatzelement durch eine Schraube gebildet, die in den Körper des Tragelements eingeschraubt ist und gegen die untere Stirnseite des Verbindungselements bewegt werden kann. Hierdurch wird wie erläutert das Verbindungselement in Richtung seiner Längsachse gegen die Vorspannung der Feder bewegt, um das erforderliche Spiel zwischen dem Kopf des Verbindungselements und der Ausnehmung zu erzielen, und dadurch eine Demontage des Kühlblocks von dem Tragelement zu ermöglichen.

Nach einer alternativen Ausführungsform der Löseeinrichtung kann diese fluidisch funktionieren. Hierbei ist an einer unteren Stirnseite des Verbindungselements, die dem Kopf des Verbindungselements entgegengesetzt ist, eine Platte angebracht, die dichtend an einer Innenumfangsfläche der Vertiefung, die innerhalb des Tragelements ausgebildet ist, anliegt. An der Seite der Platte, die dem Verbindungselement entgegengesetzt ist, kann in die Vertiefung ein Fluid eingeleitet werden. In Folge dessen wird das Verbindungselement, entgegen der Feder-Vorspannung und in seiner Längsrichtung, in seine Löseposition bewegt. Somit dient das Verbindungselement innerhalb der Vertiefung als Kolben, der durch die Beaufschlagung mit Fluid an der Seite der Platte, die dem Verbindungselement entgegengesetzt ist, entgegen der Feder-Vorspannung in die Löseposition bewegt wird.

Die vorstehend genannte Löseeinrichtung, die insbesondere fluidisch funktioniert, ermöglicht vorteilhaft einen (teil-)automatischen Wechsel der Kühlblöcke bei einer Raupengießmaschine. Lediglich dann, wenn eine Demontage der Kühlblöcke von den zugeordneten Tragelementen der Raupengießmaschine erforderlich ist, wird ein Fluid in die Vertiefungen an der Seite der Platte, die an der unteren Stirnseite des Verbindungselements angebracht ist, eingeleitet, was dann wie erläutert die Verspannung zwischen dem Kopf des Verbindungselements und der Ausnehmung aufhebt und dort - zwecks einer Demontage des Kühlblocks von dem Tragelement - ein Spiel entstehen lässt. Nach der Montage eines neuen bzw. Austausch-Kühlblocks wird die Druckbeaufschlagung mit Fluid beendet, so dass dann das Verbindungselement dank der Feder-Vorspannung selbsttätig wieder in seine Klemmposition überführt wird, und ein Verspannen des Kühlblocks mit dem Tragelement zur Folge hat.

Entsprechend sieht die Erfindung auch ein Verfahren zum Lösen eines Kühlblocks von einem umlaufenden Tragelement einer Raupengießmaschine vor, wobei der Kühlblock in einer Ausgangs- bzw. Klemmposition durch zumindest ein Verbindungselement, das innerhalb des Tragelements in Richtung seiner Längsachse verschieblich gelagert aufgenommen ist und in seiner Längsrichtung durch eine Feder vorgespannt ist, mit dem Tragelement verspannt ist, indem ein an einer oberen Stirnseite des Verbindungselements vorgesehener Kopf sich mit einer an oder in dem Kühlblock vorgesehenen Ausnehmung in Eingriff befindet. Zur Durchführung dieses Verfahrens zum Lösen des Kühlblocks wird eine untere Stirnseite des Verbindungselements mit einem Fluid unter Druck beaufschlagt, wodurch das Verbindungselement entgegen der Feder-Vorspannung in Richtung seiner Längsachse in eine Löseposition bewegt wird, in der zwischen dem Kopf des Verbindungselements und der an oder in dem Kühlblock vorgesehenen Ausnehmung Spiel entsteht. Dank dieses Spiels ist es anschließend möglich, den Kühlblock von dem Tragelement zu demontieren und entsprechend zu lösen.

In vorteilhafter Weiterbildung der Erfindung kann in dem Tragelement ein zentraler Fluidkanal ausgebildet sein, der mit einer Stirnseite der Vertiefung, innerhalb der das Verbindungselement verschieblich gelagert aufgenommen ist, in Fluidverbindung steht. Falls eine Demontage des Kühlblocks von dem Tragelement erforderlich bzw. gewünscht ist, wird ein Fluid unter Druck in den zentralen Fluidkanal eingeleitet, so dass dann das Verbindungselement, in der Funktion eines Kolbens, entgegen seiner Feder-Vorspannung in die Löseposition überführt wird.

In vorteilhafter Weiterbildung der Erfindung kann für den zentralen Fluidkanal insbesondere an einer Seitenfläche des Tragelements eine Schnellkupplung vorgesehen sein, durch die der Fluidkanal an eine externe Fluidversorgung angeschlossen werden kann, falls eine Demontage des Kühlblocks von dem Tragelement erforderlich ist. Dies bedeutet, dass der zentrale Fluidkanal mittels der Schnellkupplung stets nur dann an die externe Fluidversorgung angeschlossen wird, wenn eine Demontage des Kühlblocks von dem Tragelement bzw. der Raupengießmaschine erfolgen soll. Im Umkehrschluss bedeutet dies auch, dass im normalen Betrieb der Raupengießmaschine, wenn wie erläutert der Kühlblock mittels des Verbindungselements an dem Tragelement verspannt ist, der zentrale Fluidkanal an die externe Fluidversorgung nicht angeschlossen ist.

Mittels der vorliegenden Erfindung wird ein einfach zu nutzendes Spannsystem für eine Raupengießmaschine geschaffen, mit dem Kühlblöcke versagenssicher und insbesondere ohne kontinuierliche Energiezufuhr von außen an zugeordneten Tragelementen gehalten bzw. verspannt werden, und mit dem auch eine Demontage der Kühlblöcke zu Wartungszwecken einfach durchgeführt werden kann.

Nachstehend ist eine bevorzugte Ausführungsform der Erfindung anhand einer schematisch vereinfachten Zeichnung im Detail beschrieben.

Es zeigen:
- Fig. 1: eine Seitenansicht eines Kühlblocks und eines Tragelements einer Raupengießmaschine in Verbindung mit einem erfindungsgemäßen Spannsystem, in einer Klemmposition, wenn ein Kühlblock an einem zugeordneten Tragelement einer Raupengießmaschine verspannt ist,
- Fig. 2: das Spannsystem von Fig. 1, in einer Löseposition, in der die Verspannung zwischen dem Kühlblock und dem Tragelement aufgehoben ist,
- Fig. 3: eine an einem Kühlblock angebrachte Zusatzplatte in einer Schnittansicht,
- Fig. 4: eine Ansicht der Zusatzplatte von Fig. 4 von der Bedienungsseite her,
- Fig. 5: eine Ansicht einer Raupengießmaschine von der Bedienungsseite her, wobei ein Spannsystem von Fig. 1 eingesetzt wird, und
- Fig. 6: eine Seitenansicht von zwei gegenüberliegend angeordneten endlosen Umlaufbahnen der Raupengießmaschine von Fig. 5.

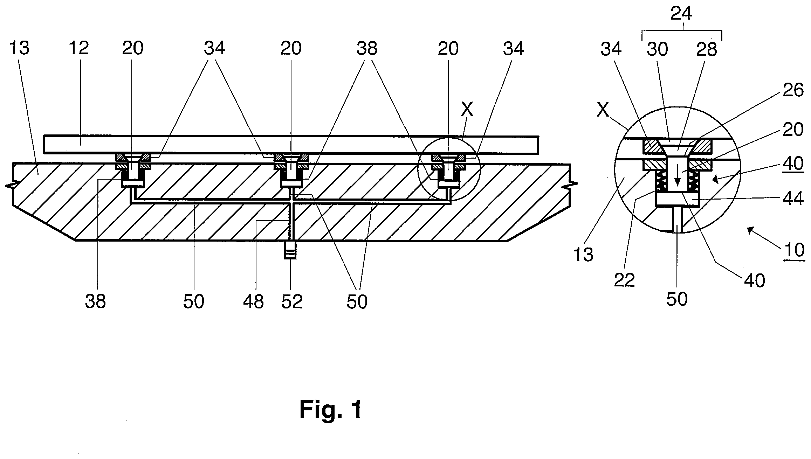

Nachstehend ist unter Bezugnahme auf die Fig. 1 bis 6 eine bevorzugte Ausführungsform eines erfindungsgemäßen Spannsystems 10 erläutert, das zum Befestigen eines Kühlblocks 12 an einem umlaufenden Tragelement 13 einer Raupengießmaschine 14 dient. Gleiche Merkmale in der Zeichnung sind jeweils mit gleichen Bezugszeichen versehen. An dieser Stelle wird gesondert darauf hingewiesen, dass die Zeichnung lediglich vereinfacht und insbesondere ohne Maßstab dargestellt ist. Bei diesem Spannsystem 10 ist auch vorgesehen, dass die Verspannung eines Kühlblocks 12, wenn dieser an einem Tragelement 13 befestigt ist, in einfacher Weise wieder aufgehoben werden kann, zwecks einer Demontage des Kühlblocks 12 von der Raupengießmaschine 14, wie nachstehend noch gesondert erläutert.

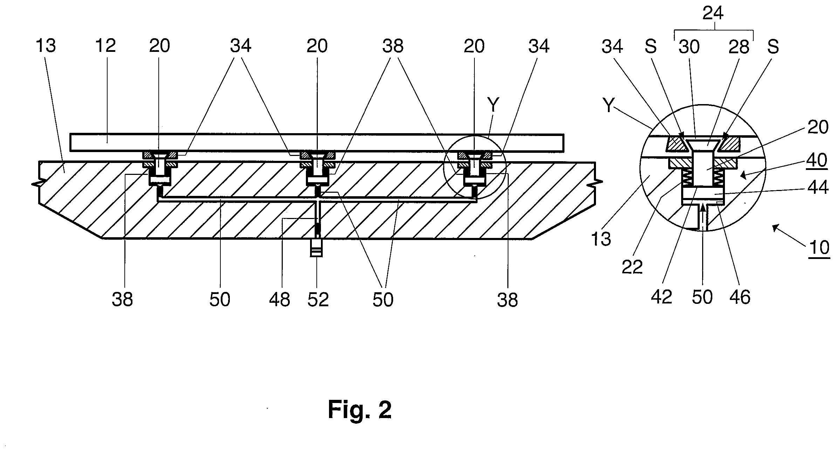

Die Fig. 1 und 2 zeigen jeweils eine Seitenansicht eines Kühlblocks 12 und eines zugeordneten Tragelements 13 einer Raupengießmaschine 14, wobei ein Spannsystem 10 nach der vorliegenden Erfindung zum Einsatz kommt. Das Spannsystem 10 umfasst ein Verbindungselement 20, das mittels einer Feder 22 in seiner Längsrichtung vorgespannt ist. Das Verbindungselement 20 kann in Form eines länglichen Bolzens ausgebildet sein. Des Weiteren umfasst das Spannsystem 10 Klemmmittel 24, durch die der Kühlblock 12 an dem Tragelement 13 befestigt werden kann. Im Einzelnen sind die Klemmmittel 24 durch einen an einer oberen Stirnseite 26 des Verbindungselements 20 vorgesehenen Kopf und eine in Wechselwirkung damit bringbare Ausnehmung 30, die an oder in dem Kühlblock 12 vorgesehen ist, gebildet. Die Funktionsweise des Spannsystems 10 ist nachfolgend noch im Detail erläutert.

Die Bereiche X und Y von Fig. 1 und Fig. 2 sind im jeweils rechten Bildbereich zusätzlich vergrößert dargestellt. Hieraus ist ersichtlich, dass an einer Unterseite des Kühlblocks 12, d.h. an einer Seite gegenüberliegend zum Tragelement 13, eine Zusatzplatte 34 angebracht ist, in der die Ausnehmung 30 ausgebildet ist. Die Ausnehmung 30 ist in Form einer Nut 36 (z.B. als Schwalbenschwanz-Nut) ausgebildet, wobei der Kopf 28 des Verbindungselements 20 komplementär hierzu geformt ist.

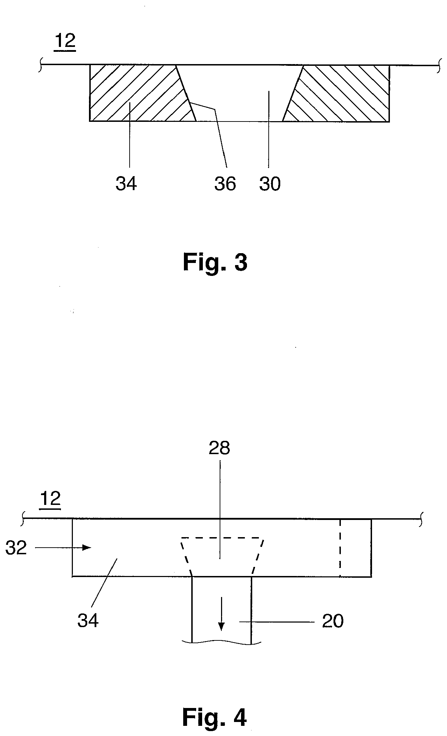

In der Fig. 3 ist die Zusatzplatte 34 in einer Schnittdarstellung gezeigt. Hieraus ist die besagte Formgebung der Nut 36 ersichtlich. Die Fig. 4 zeigt die Zusatzplatte 34 in einer Ansicht von der Bedienungsseite her, und verdeutlicht eine in der Zusatzplatte 34 vorgesehene seitliche Öffnung 32, die in die Ausnehmung 30 hineinführt.

Innerhalb des Tragelements 13 ist eine insbesondere zylindrische Vertiefung 38 ausgebildet, in der das Verbindungselement 20, zusammen mit der Feder 22, axial, d.h. in Richtung seiner Längsachse, verschieblich gelagert aufgenommen ist. Hierbei wirkt die Vorspannung der Feder 22 derart, dass das Verbindungselement 20 in Richtung des Tragelements 13, d.h. hinein in die Vertiefung 38, in eine Klemmposition bewegt wird, die nachfolgend noch gesondert erläutert ist.

Innerhalb des Tragelements 13 ist eine Löseeinrichtung 40 des Spannsystems 10 integriert. Im Einzelnen ist an einer unteren Stirnseite 42 (vgl. Fig. 2) des Verbindungselements 20 eine Platte 44 angebracht, die mit ihrem Umfang dichtend an einer Innenumfangsfläche 46 der Vertiefung 38 anliegt. In eine Stirnseite der Vertiefung 38, die der Platte 44 gegenüberliegt, mündet ein Fluidkanal 50, durch den ein Fluid unter Druck in die Vertiefung 38 eingeleitet werden kann, nämlich in eine Stirnseite der Vertiefung 38 angrenzend zu der Platte 44.

Die Ansichten von Fig. 1 und Fig. 2 verdeutlichen, dass an einer Unterseite eines Kühlblocks 12 insgesamt drei Zusatzplatten 34 angebracht sind. Entsprechend sind in dem zugeordneten Tragelement 13 auch insgesamt drei Vertiefungen 38 ausgebildet, mit jeweils darin verschieblich gelagert aufgenommenen Bolzenelementen 20. In Abweichung von diesen Darstellungen versteht sich, dass bei dem erfindungsgemäßen Spannsystem 10 über der Breite eines Kühlblocks 12 bzw. eines Tragelements 13 auch mehr oder weniger als drei Zusatzplatten 34 (mit Ausnehmungen 30) und zugeordneten Bolzenelementen 20 vorgesehen sein können. Ungeachtet der Anzahl der Vertiefungen 38, die innerhalb des Tragelements 13 ausgebildet sind, darf darauf hingewiesen werden, dass die Fluidkanäle 50, die in die jeweiligen Vertiefungen 38 führen, in einen zentralen Fluidkanal 48 münden, der insbesondere an einer Seitenfläche des Tragelements 13 mit einer Schnellkupplung 52 ausgestattet sein kann. Mittels der Schnellkupplung 52 ist es möglich, den zentralen Fluidkanal 48, und somit auch die einzelnen Fluidkanäle 50, an eine externe Fluidversorgung anzuschließen, um - bei Bedarf - das Verbindungselement 20 gegen seine Feder-Vorspannung zu bewegen und dadurch aus der Vertiefung 38 herauszuheben.

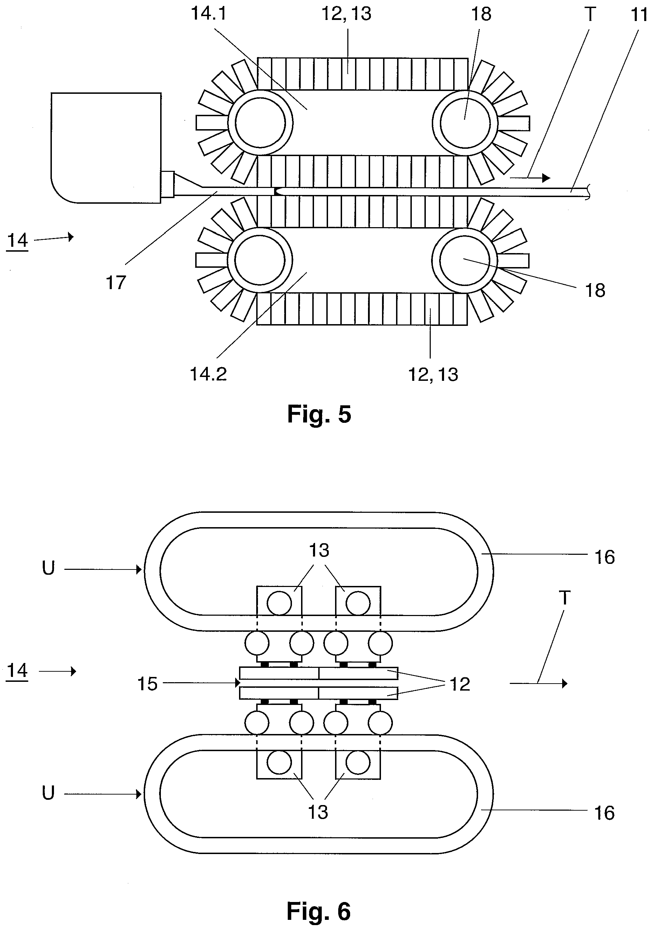

Fig. 5 zeigt eine vereinfachte Ansicht von der Bedienungsseite her einer Raupengießmaschine 14, bei der das erfindungsgemäße Spannsystem 10 zum Einsatz kommt. Die Raupengießmaschine 14 weist eine obere Raupe 14.1 und eine untere Raupe 14.2 auf, die jeweils aus einer Mehrzahl von Tragelementen 13 und daran befestigten Kühlblöcken 12 gebildet sind. Fig. 6 zeigt eine Seitenansicht von zwei Führungsschienen 16, mit denen zwei gegenüberliegend angeordnete endlose Umlaufbahnen für die Raupengießmaschine 14 von Fig. 5 gebildet werden. Hierbei sind entlang jeder Führungsschiene 16 eine Mehrzahl von Tragelementen 13 mit daran angebrachten Kühlblöcken 12 geführt, derart, dass sich eine durchgehende Kette von Tragelementen 13 bildet, die in der Transportrichtung T entlang der Führungsschienen 16 befördert bzw. transportiert werden. Zur Veranschaulichung der Funktionsweise der Raupengießmaschine 14 sind in der Fig. 6 zur Vereinfachung an den beiden Führungsschienen 16 jeweils nur zwei Tragelemente 13 mit daran angebrachten Kühlblöcken 12 gezeigt.

Die Fig. 6 verdeutlicht weiters, dass zwischen den Kühlblöcken 12, die in den geraden Abschnitten der Umlaufbahn U der Führungsschienen 16 in Gegenüberstellung gelangen, eine Gießform 15 ausgebildet wird. In Anbetracht der Transportrichtung T der Tragelemente 13 entlang der Führungsschienen 16 handelt es sich bei dieser Gießform 15 um eine bewegte Gießform. Durch ein Vergießen von flüssigem Metall hinein in die bewegte Gießform 15 durch eine Düse 17 (vgl. Fig. 5) wird ein Gießgut 11 hergestellt.

Die Erfindung funktioniert nun wie folgt:
Bei einer Montage eines Kühlblocks 12 an einem Tragelement 13 wird zunächst der Kopf 28 des Verbindungselements 20 in die Ausnehmung 30 eingebracht, vorzugsweise durch deren seitliche Öffnung 32. Bei dieser Montage wird der Feder-Vorspannung des Verbindungselements 20 entgegengewirkt, vorzugsweise durch das Einleiten von Fluid hinein in die Vertiefung 38 durch den Fluidkanal 50, wie es in dem vergrößerten Bereich Y von Fig. 2 durch einen Pfeil kenntlich gemacht ist. Falls anschließend der Vorspannung der Feder 22 keine Gegenkraft entgegengesetzt ist, wird das Verbindungselement 20, wie durch den Pfeil in dem vergrößerten Bereich X von Fig. 1 angedeutet, selbsttätig nach unten in eine Klemmposition überführt, in welcher der Kopf 28 des Verbindungselements 20 in Eingriff mit der Nut 36 der Ausnehmung 30 gelangt und damit verklemmt. In dieser Weise wird der Kühlblock 12 an dem Tragelement 30 befestigt bzw. damit verspannt.

Die Fig. 1 verdeutlicht die genannte Klemmposition für die Bolzenelemente 20, wenn - wie soeben erläutert - der Kühlblock 12 mit dem Tragelement 13 verspannt ist.

Ein Lösen des Spannsystems 10, und damit ein Demontieren des Kühlblocks 12 von dem Tragelement 13, kann dadurch erfolgen, dass der zentrale Fluidkanal 48 mittels der Schnellkupplung 52 an eine externe Fluidversorgung angeschlossen wird, wobei dann Fluid unter Druck in die jeweiligen Vertiefungen 38 eingeleitet wird. Hierbei drückt dann das Fluid von unten gegen die an dem Verbindungselement 20 angebrachte Platte 44. In Folge dessen wird das Verbindungselement 20, in der Funktion eines Kolbens, innerhalb der Vertiefung 38 nach oben gedrückt, so dass zwischen dem Kopf 28 des Verbindungselements und der zugeordneten Ausnehmung 30 innerhalb der Zusatzplatte 34 ein Spiel entsteht. Dieses Spiel ist in dem vergrößerten Bereich Y von Fig. 2 mit den Pfeilen "S" gekennzeichnet, und ermöglicht anschließend ein Lösen der Zusatzplatte 34 von dem Kopf 28 des Bolzelements 20, und eine entsprechende Demontage des Kühlblocks 12 von dem Tragelement 13.

Ein weiterer Vorteil des erfindungsgemäßen Spannsystems 10 liegt darin, dass nach einer Demontage eines Kühlblocks 12 von einem Tragelement 13, z.B. zu Wartungs- oder Reparaturzwecken, das Verbindungselement 20 bedingt durch die Vorspannung der Feder 20 so weit in die Vertiefung 38 hinein bewegt wird, dass der Kopf 28 des Verbindungselements 20 am oberen Rand der Vertiefung 38 aufsitzt. Dies hat zur Folge, dass dann das Verbindungselement 20 nicht weit aus der Vertiefung 38 herausragt und somit gegen versehentliche Beschädigungen geschützt ist. Eine erneute Montage eines Kühlblocks 12 an dem Tragelement 13 wird in einfacher Weise dadurch ermöglicht, dass - wie erläutert - die Vertiefung 38 mit einem Fluid unter Druck beaufschlagt und dadurch das Verbindungselement 20 nach oben aus der Vertiefung 38 herausbewegt wird.

Schließlich darf an dieser Stelle nochmals darauf hingewiesen werden, dass im normalen Betrieb der Raupengießmaschine 14 eine Druckversorgung mit Fluid nicht erforderlich ist, und entsprechend eine externe Fluidversorgung an die Schnellkupplung 52 auch nicht angeschlossen ist. Vielmehr funktioniert das Verspannen eines Kühlblocks 12 mit einem zugeordneten Tragelement 13 rein passiv und insbesondere elektrisch unabhängig, nämlich allein durch die erläuterte Vorspannung des Verbindungselements 20 mittels der Feder 22 in Richtung des Trageelements 13, wodurch der Kopf 28 des Verbindungselements 20 mit der Ausnehmung 30 innerhalb der Zusatzplatte 34 in Eingriff gebracht und verklemmt wird.

### Bezuqszeichenliste

- 10: Spannsystem
- 11: Gießgut
- 12: Kühlblock
- 13: Tragelement
- 14: Raupengießmaschine
- 14.1: obere Raupe
- 14.2: untere Raupe
- 15: Gießform
- 16: Führungsschiene
- 17: Düse
- 18: Antriebsrad
- 20: Verbindungselement
- 22: Feder
- 24: Klemmmittel
- 26: obere Stirnseite (des Verbindungselements 20)
- 28: Kopf (des Verbindungselements 20, an dessen oberer Stirnseite 26)
- 30: Ausnehmung (an oder in dem Kühlblock 12)
- 32: seitliche Öffnung (der Ausnehmung 30
- 34: Zusatzplatte
- 36: Nut
- 38: (insbesondere zylindrische) Vertiefung innerhalb des Tragelements 13
- 40: Löseeinrichtung
- 42: untere Stirnseite (des Verbindungselements 20)
- 44: Platte (an unterer Stirnseite 42 des Verbindungselements 20 angebracht)
- 46: Innenumfangsfläche (der Vertiefung 38)
- 48: zentraler Fluidkanal
- 50: Fluidkanäle
- 52: Schnellkupplung
- S: Spiel (zwischen Kopf 28 des Verbindungselements 20 und der Ausnehmung 30)
- T: Transportrichtung (eines Tragelements 13 entlang der Führungsschiene 16)
- U: Umlaufbahn (einer Führungsschiene 16)

## Patentansprüche

1. Spannsystem (10) zum Befestigen eines Kühlblocks (12) an einem umlaufenden Tragelement (13) einer Raupengießmaschine (14), umfassend zumindest ein Verbindungselement (20), das in seiner Längsrichtung durch eine Feder (22) vorgespannt ist, und
Klemmmittel (24), durch die der Kühlblock (12) an dem Tragelement (13) befestigbar ist,
**dadurch gekennzeichnet,**
**dass** das Verbindungselement (20) innerhalb des Tragelements (13) in Richtung seiner Längsachse verschieblich gelagert aufnehmbar ist, und dass die Klemmmittel (24) durch einen an einer oberen Stirnseite (26) des Verbindungselements (20) vorgesehenen Kopf (28) und eine in Wechselwirkung damit bringbare Ausnehmung (30), die an oder in dem Kühlblock (12) vorgesehen ist, gebildet sind,
wobei das Verbindungselement (20) mittels der Feder (22) zum Tragelement (13) hin vorspannbar ist und dadurch in eine Klemmposition überführbar ist, in welcher der Kühlblock (12), wenn der Kopf (28) des Verbindungselements (20) sich mit der an oder in dem Kühlblock (12) vorgesehenen Ausnehmung (30) in Eingriff befindet, selbsttätig mit dem Tragelement (13) verspannt wird.

2. Spannsystem (10) nach Anspruch 1, **dadurch gekennzeichnet, dass** die Ausnehmung (30) eine seitliche Öffnung (32) aufweist, wobei der Kopf (28) des Verbindungselements (20) durch die seitliche Öffnung (32) in die Ausnehmung (30) einbringbar ist.

3. Spannsystem (10) nach Anspruch 1 oder 2, **dadurch gekennzeichnet, dass** an dem Kühlblock (12) an einer Seite gegenüberliegend zum Tragelement (13) zumindest eine Zusatzplatte (34) angebracht ist, in der die Ausnehmung (30) ausgebildet ist.

4. Spannsystem (10) nach einem der vorhergehenden Ansprüche, **dadurch gekennzeichnet, dass** die Ausnehmung (30) in Form einer Nut (36) ausgebildet ist, wobei der Kopf (28) des Verbindungselements (20) komplementär zu der Nut (36) geformt ist.

5. Spannsystem (10) nach einem der vorhergehenden Ansprüche, **dadurch gekennzeichnet, dass** innerhalb des Tragelements (13) eine insbesondere zylindrische Vertiefung (38) ausgebildet ist, in der das Verbindungselement (20) in Richtung seiner Längsachse verschieblich lagerbar und zusammen mit der Feder (22) aufnehmbar ist.

6. Spannsystem (10) nach einem der vorhergehenden Ansprüche, **dadurch gekennzeichnet, dass** an oder in dem Tragelement (13) eine Löseeinrichtung (40) vorgesehen ist, mittels der das Verbindungselement (20) entgegen seiner Feder-Vorspannung in eine Löseposition bewegbar ist, in der zwischen dem Kopf (28) des Verbindungselements (20) und der an oder in dem Kühlblock (12) vorgesehenen Ausnehmung (30) Spiel (S) entsteht, so dass der Kühlblock (12) von dem Tragelement (13) demontierbar ist.

7. Spannsystem (10) nach Anspruch 6, **dadurch gekennzeichnet, dass** die Löseeinrichtung (40) mechanisch funktioniert, wobei ein Zusatzelement in Kontakt mit einem Fußabschnitt an einer unteren Stirnseite (42) des Verbindungselements (20) bringbar ist, um das Verbindungselement (20) in seine Löseposition zu überführen, vorzugsweise, dass das Zusatzelement durch eine Schraube gebildet ist, die gegen die untere Stirnseite (42) des Verbindungselements (20) bewegbar ist.

8. Spannsystem (10) nach Anspruch 6, soweit rückbezogen auf Anspruch 5, **dadurch gekennzeichnet, dass** die Löseeinrichtung (40) fluidisch funktioniert, wobei an einer unteren Stirnseite (42) des Verbindungselements (20), die dem Kopf (28) des Verbindungselements (20) entgegengesetzt ist, eine Platte (44) angebracht ist, die dichtend an einer Innenumfangsfläche (46) der innerhalb des Tragelements (13) ausgebildeten Vertiefung (38) anliegt, wobei ein Fluid in die Vertiefung (38) an der Seite der Platte (44), die dem Verbindungselement (20) entgegengesetzt ist, einleitbar ist und in Folge dessen das Verbindungselement (20) entgegen der Feder-Vorspannung in seine Löseposition bewegt wird.

9. Spannsystem (10) nach Anspruch 8, **dadurch gekennzeichnet, dass** in dem Tragelement (13) ein zentraler Fluidkanal (48) ausgebildet ist, der mit einer Stirnseite (26, 42) der Vertiefung (38), innerhalb der das Verbindungselement (20) verschieblich gelagert aufgenommen ist, in Fluidverbindung steht.

10. Spannsystem (10) nach Anspruch 8 oder 9, **dadurch gekennzeichnet, dass** in dem Tragelement (13) eine Mehrzahl von Vertiefungen (38) ausgebildet sind, in denen jeweils ein Verbindungselement (20) verschieblich aufnehmbar und mittels einer zugeordneten Feder (22) in Richtung des Tragelements (13) vorspannbar ist, wobei an oder in dem Kühlblock (12) eine Mehrzahl von Ausnehmungen (30) vorgesehen sind, die mit einem Kopf (28) eines jeweiligen Verbindungselements (20) in Wechselwirkung bringbar sind.

11. Spannsystem (10) nach Anspruch 10, dass zu den einzelnen Vertiefungen jeweils ein Fluidkanal (50) führt, wobei diese Fluidkanäle (50) in den zentralen Fluidkanal (48) münden.

12. Spannsystem (10) nach einen der Ansprüche 9 bis 11, **dadurch gekennzeichnet, dass** für den zentralen Fluidkanal (48) insbesondere an einer Seitenfläche des Tragelements (13) eine Schnellkupplung (52) vorgesehen ist, durch die der zentrale Fluidkanal (48) an eine externe Fluidversorgung anschließbar ist, falls eine Demontage des Kühlblocks (12) von dem Tragelement (13) erforderlich ist.

13. Verfahren zum Befestigen eines Kühlblocks (12) an einem umlaufenden Tragelement (13) einer Raupengießmaschine (14), wobei der Kühlblock (12) an dem Tragelement (13) durch zumindest ein Verbindungselement (20), das in seiner Längsrichtung durch eine Feder (22) vorgespannt ist, befestigt wird,
**dadurch gekennzeichnet**
**dass** ein an einer oberen Stirnseite (26) des Verbindungselements (20) vorgesehener Kopf (28) in Eingriff mit einer an oder in dem Kühlblock (12) vorgesehenen Ausnehmung (30) gebracht wird, wobei das Verbindungselement (20) innerhalb des Tragelements (13) in Richtung seiner Längsachse verschieblich gelagert aufgenommen ist und mittels der Feder (22) zum Tragelement (13) hin vorgespannt ist und dadurch in Folge einer Verschiebung in Richtung seiner Längsachse in eine Klemmposition überführt wird, in welcher der Kühlblock (12), wenn der Kopf (28) des Verbindungselements (20) sich mit der an oder in dem Kühlblock (12) vorgesehenen Ausnehmung (30) in Eingriff befindet, selbsttätig mit dem Tragelement (13) verspannt wird.

14. Verfahren zum Lösen eines Kühlblocks (12) von einem umlaufenden Tragelement (13) einer Raupengießmaschine (14), wobei der Kühlblock (12) in einer Ausgangs- bzw. Klemmposition durch zumindest ein Verbindungselement (20), das in seiner Längsrichtung durch eine Feder (22) vorgespannt ist, mit dem Tragelement (13) verspannt ist, indem ein an einer oberen Stirnseite (26) des Verbindungselements (20) vorgesehener Kopf (28) sich mit einer an oder in dem Kühlblock (12) vorgesehenen Ausnehmung (30) in Eingriff befindet,
**dadurch gekennzeichnet,**
**dass** das Verbindungselement (20) innerhalb des Tragelements (13) in Richtung seiner Längsachse verschieblich gelagert aufgenommen ist, und **dass** eine untere Stirnseite (42) des Verbindungselements (20) mit einem Fluid unter Druck beaufschlagt wird, wodurch das Verbindungselement (20) entgegen der Feder-Vorspannung in Richtung seiner Längsachse in eine Löseposition bewegt wird, in der zwischen dem Kopf (28) des Verbindungselements (20) und der an oder in dem Kühlblock (12) vorgesehenen Ausnehmung (30) Spiel (S) entsteht und dadurch der Kühlblock (12) von dem Tragelement (13) demontierbar ist und entsprechend gelöst wird.

15. Verfahren nach Anspruch 13 oder 14, das mit einem Spannsystem (10) nach einem der Ansprüche 1 bis 12 durchgeführt wird.

## Claims

1. Clamping system (10) for fastening a cooling block (12) to a circulating support element (13) of a caterpillar casting machine (14), comprising
at least one connecting element (20) which is biased in the longitudinal direction thereof by a spring (22), and
clamping means (24) by which the cooling block (12) is fastenable to the support element (13),
**characterised in that**
the connecting element (20) is receivable within the support element (13) to be mounted to be displaceable in the direction of its longitudinal axis and
the clamping means (24) are formed by a head (28), which is provided at an upper end face (26) of the connecting element (20), and a recess (30), which can be brought into interaction with the head and which is provided at or in the cooling block (12),
wherein the connecting element (20) can be biased by means of the spring (22) towards the support element (13) and thereby transferred to a clamping position in which the cooling block (12) is automatically clamped to the support element (13) when the head (28) of the connecting element (20) is disposed in engagement with the recess (30) provided at or in the cooling block (12).

2. Clamping system (10) according to claim 1, **characterised in that** the recess (30) has a lateral opening (32), wherein the head (28) of the connecting element (20) can be introduced into the recess (30) through the lateral opening (32).

3. Clamping system (10) according to claim 1 or 2, **characterised in that** at least one auxiliary plate (34) in which the recess (30) is formed is mounted on the cooling block (12) at a side opposite the support element (13).

4. Clamping system (10) according to any one of the preceding claims, **characterised in that** the recess (30) is constructed in the form of a groove (36), wherein the head (28) of the connecting element (20) is formed to be complementary to the groove (36).

5. Clamping system (10) according to any one of the preceding claims, **characterised in that** a depression (38), particularly cylindrical depression, in which the connecting element (20) can be mounted to be displaceable in the direction of its longitudinal axis and is receivable together with the spring (22), is formed within the support element (13).

6. Clamping system (10) according to any one of the preceding claims, **characterised in that** a release device (40) is provided at or in the support element (13), by means of which release device the connecting element (20) is movable against its spring bias into a release position in which play (S) arises between the head (28) of the connecting element (20) and the recess (30), which is provided at or in the cooling block (12), so that the cooling block (12) is demountable from the support element (13).

7. Clamping system (10) according to claim 6, **characterised in that** the release device (40) functions mechanically, wherein an auxiliary element can be brought into contact with a foot section at a lower end face (42) of the connecting element (20) so as to transfer the connecting element (20) to its release position, preferably **in that** the auxiliary element is formed by a screw which is movable against the lower end face (42) of the connecting element (20).

8. Clamping system (10) according to claim 6 insofar as dependent on claim 5, **characterised in that** the release device (40) functions with fluid, wherein a plate (44) sealingly bearing against an inner circumferential surface (46) of the depression (38) formed within the support element (38) is mounted on a lower end face (42), which is opposite the head (28) of the connecting element (20), of the connecting element (20), wherein a fluid can be conducted into the depression (38) at the side of the plate (44) opposite the connecting element (20) and as a consequence thereof the connecting element (20) is moved against the spring bias into its release position.

9. Clamping system (10) according to claim 8, **characterised in that** a central fluid channel (48) disposed in fluid connection with an end face (26, 42) of the depression (38), within which the connecting element (20) is mounted to be displaceable, is formed in the support element (13).

10. Clamping system (10) according to claim 8 or 9, **characterised in that** a plurality of depressions (30), in each of which a respective connecting element (30) is receivable to be displaceable and can be biased by means of an associated spring (22) in the direction of the support element (13), is formed in the support element (13), wherein a plurality of recesses (30) which can be brought into interaction with a head (28) of a respective connecting element (20) is provided at or in the cooling block (12).

11. Clamping system (10) according to claim 10, **characterised in that** a respective fluid channel (50) leads to each of the individual depressions, wherein these fluid channels (50) open into the central fluid channel (48).

12. Clamping system (10) according any one of claims 9 to 11, **characterised in that** a quick-action coupling (52) is provided for the central fluid channel (48), in particular at a side surface of the support element (13), by which coupling the central fluid channel (48) is connectible with an external fluid supply if demounting of the cooling block (12) from the support element (13) is required.

13. Method of fastening a cooling block (12) to a circulating support element (13) of a caterpillar casting machine (14), wherein the cooling block (12) is fastened to the support element (13) by at least one connecting element (20) which is biased in the longitudinal direction thereof by a spring (22),
**characterised in that**
a head (28) provided at an upper end face (26) of the connecting element (20) is brought into engagement with a recess (30) provided at or in the cooling block (12), wherein the connecting element (20) is received within the support element (13) to be mounted to be displaceable in the direction of its longitudinal axis and is biased by means of the spring (22) towards the support element (13) and as a consequence of displacement in the direction of its longitudinal axis is thereby transferred to a clamping position in which the cooling block (12) is automatically clamped to the support element (13) when the head (28) of the connecting element (20) is disposed in engagement with the recess (30) provided at or in the cooling block (12).

14. Method of releasing a cooling block (12) from a circulating support element (13) of a caterpillar casting machine (14), wherein the cooling block (12) in a starting or clamping position is clamped to the support element (13) by at least one connecting element (20), which is biased in the longitudinal direction thereof by a spring (22), in that a head (28) provided at an upper end face (26) of the connecting element (20) is disposed in engagement with a recess (30) provided at or in the cooling block (12),
**characterised in that**
the connecting element (20) is received within the support element (13) to be mounted to be displaceable in the direction of its longitudinal axis and
a lower end face (42) of the connecting element (20) is acted on by a fluid under pressure, whereby the connecting element (20) is moved against the spring bias in the direction of its longitudinal axis into a release position in which play (S) arises between the head (28) of the connecting element (20) and the recess (30) provided at or in the cooling block (12), and the cooling block (12) is thereby demountable from the support element (13) and accordingly released.

15. Method according to claim 13 or 14, which is performed by a clamping system (10) according to any one of claims 1 to 12.

## Revendications

1. Système de serrage (10) destiné à la fixation d'un bloc de refroidissement (12) contre un élément périphérique (13) faisant office de support, d'une machine de coulée (14) du type à chenilles, comprenant :
au moins un élément de liaison (20) qui est mis en état de précontrainte dans sa direction longitudinale à l'intervention d'un ressort (22) ; et
des moyens de fixation (24) par l'intermédiaire desquels le bloc de refroidissement (12) peut être fixé contre l'élément (13) faisant office de support ;
**caractérisé**
**en ce que** l'élément de liaison (20) peut venir se loger au sein de l'élément (13) faisant office de support en étant monté de manière à pouvoir se déplacer dans la direction de son axe longitudinal ; et
**en ce que** les moyens de fixation (24) sont obtenus par l'intermédiaire d'une tête (28) qui est prévue sur un côté avant supérieur (26) de l'élément de liaison (20) et par l'intermédiaire d'un évidement (30) qui peut être amené en interaction avec la tête en question, qui est prévu contre ou dans le bloc de refroidissement (12) ;
dans lequel l'élément de liaison (20) peut être mis en état de précontrainte au moyen du ressort (22) dans la direction de l'élément (13) faisant office de support et peut de cette manière être transféré dans une position de fixation dans laquelle le bloc de refroidissement, (12) lorsque la tête (28) de l'élément de liaison (20) est mise en engrènement avec l'évidement (30) qui est prévu contre ou dans le bloc de refroidissement (12), est serré de manière automatique avec l'élément (13) faisant office de support.

2. Système de serrage (10) selon la revendication 1, **caractérisé en ce que** l'évidement (30) présente une ouverture latérale (32) ; dans lequel la tête (28) de l'élément de liaison (20) peut venir s'insérer en passant par l'ouverture latérale (32) dans l'évidement (30).

3. Système de serrage (10) selon la revendication 1 ou 2, **caractérisé en ce que**, contre le bloc de refroidissement (12), sur un côté opposé à l'élément (13) faisant office de support, vient s'appliquer au moins une plaque supplémentaire (34) dans laquelle est réalisé l'évidement (30).

4. Système de serrage (10) selon l'une quelconque des revendications précédentes, **caractérisé en ce que** l'évidement (30) est réalisé sous la forme d'une rainure (36) ; dans lequel la tête (28) de l'élément de liaison (20) est façonnée pour prendre une configuration complémentaire à celle de la rainure (36).

5. Système de serrage (10) selon l'une quelconque des revendications précédentes, **caractérisé en ce que**, au sein de l'élément (13) faisant office de support, on réalise un renfoncement (38) en particulier de forme cylindrique, dans lequel l'élément de liaison (20) peut venir se disposer de manière à pouvoir se déplacer dans la direction de son axe longitudinal et de manière à pouvoir venir se loger conjointement avec le ressort (22).

6. Système de serrage (10) selon l'une quelconque des revendications précédentes, **caractérisé en ce que**, contre ou dans l'élément (13) faisant office de support, on prévoit un mécanisme de libération (40) au moyen duquel l'élément de liaison (20) peut être soumis à un déplacement à l'encontre de sa mise en état de précontrainte par ressort, afin de prendre une position de libération dans laquelle un jeu (S) existe entre la tête (28) de l'élément de liaison (20) et l'évidement (30) qui est prévu contre ou dans le bloc de refroidissement (12), d'une manière telle que le bloc de refroidissement (12) peut être démonté par rapport à l'élément (13) faisant office de support.

7. Système de serrage (10) selon la revendication 6, **caractérisé en ce que** le mécanisme de libération (40) est soumis à un fonctionnement mécanique ; dans lequel un élément supplémentaire peut être mis en contact avec un tronçon de base sur un côté avant inférieur (42) de l'élément de liaison (20) dans le but de faire passer l'élément de liaison (20) dans sa position de libération ; de préférence, **en ce que** l'élément supplémentaire est réalisé à l'intervention d'une vis qui peut se déplacer jusque contre le côté avant inférieur (42) de l'élément de liaison (20).

8. Système de serrage (10) selon la revendication 6, pour autant qu'elle se rapporte à la revendication 5, **caractérisé en ce que** le mécanisme de libération (40) est soumis à un fonctionnement faisant appel à un fluide ; dans lequel, sur un côté avant inférieur (42) de l'élément de liaison (20), qui est opposé à la tête (28) de l'élément de liaison (20), on applique une plaque (44) qui vient se disposer en étanchéité contre une surface périphérique interne (46) du renfoncement (38) réalisé au sein de l'élément (13) faisant office de support ; dans lequel un fluide peut être introduit dans le renfoncement (38) du côté de la plaque (44) qui est opposé à l'élément de liaison (20), et en conséquence de quoi, l'élément de liaison (20) est soumis à un déplacement, à l'encontre de la mise en état de précontrainte par ressort, pour prendre sa position de libération.

9. Système de serrage (10) selon la revendication 8, **caractérisé en ce que**, dans l'élément (13) faisant office de support, on réalise un canal central pour fluide (48) qui est mis en liaison par fluide avec un côté avant (26, 42) du renfoncement (38), à l'intérieur duquel est logé l'élément de liaison (20) en étant monté en mobilité.

10. Système de serrage (10) selon la revendication 8 ou 9, **caractérisé en ce que**, dans l'élément (13) faisant office de support, on réalise un certain nombre de renforcements (38) dans lesquels, respectivement, un élément de liaison (20) peut venir se loger en mobilité et peut être mis en état de précontrainte au moyen d'un ressort (22) qui lui est attribué, dans la direction de l'élément (13) faisant office de support ; dans lequel, contre ou dans le bloc de refroidissement (12), on prévoit une multitude d'évidements (30) qui peuvent être amenés en interaction avec une tête (28) d'un élément de liaison respectif (20).

11. Système de serrage (10) selon la revendication 10, **caractérisé en ce que**, respectivement, un canal pour fluide (50) mène aux renfoncement individuels ; dans lequel ces canaux pour fluide (50) débouchent dans le canal central pour fluide (48).

12. Système de serrage (10) selon l'une quelconque des revendications 9 à 11, **caractérisé en ce que** l'on prévoit, pour le canal central pour fluide (48), en particulier contre une surface latérale de l'élément (13) faisant office de support, un raccord instantané (52) par l'intermédiaire duquel on peut raccorder le canal central pour fluide (48) à une alimentation de fluide externe, dans le cas où un démontage du bloc de refroidissement (12) par rapport à l'élément (13) faisant office de support s'avère nécessaire.

13. Procédé destiné à la fixation d'un bloc de refroidissement (12) à un élément périphérique (13) faisant office de support, d'une machine de coulée (14) du type à chenilles; dans lequel le bloc de refroidissement (12) est fixé contre l'élément (13) faisant office de support par l'intermédiaire d'au moins un élément de liaison (20) qui est mis en état de précontrainte dans sa direction longitudinale à l'intervention d'un ressort (22), **caractérisé en ce que** l'on amène une tête (28) qui est prévue sur un côté avant supérieur (26) de l'élément de liaison (20) en engrènement avec un évidement (30) qui est prévu contre ou dans le bloc de refroidissement (12) ; dans lequel l'élément de liaison (20) vient se loger au sein de l'élément (13) faisant office de support en étant monté en mobilité dans la direction de son axe longitudinal et est mis en état de précontrainte dans la direction de l'élément (13) faisant office de support, au moyen du ressort (22) et de cette manière, suite à un déplacement dans la direction de son axe longitudinal, est transféré dans une position de fixation dans laquelle le bloc de refroidissement (12), lorsque la tête (28) de l'élément de liaison (20) est mis en engrènement avec l'évidement (30) qui est prévu contre ou dans le bloc de refroidissement (12), est serré de manière automatique avec l'élément (13) faisant office de support.

14. Procédé destiné à la libération d'un bloc de refroidissement (12) par rapport à un élément périphérique (13) faisant office de support, d'une machine de coulée (14) du type à chenilles ; dans lequel le bloc de refroidissement (12) est serré, dans une position de départ, respectivement de fixation, par l'intermédiaire d'au moins un élément de liaison (20) qui est mis en état de précontrainte dans sa direction longitudinale à l'intervention d'un ressort (22), avec l'élément (13) faisant office de support, par le fait qu'une tête (28) qui est prévue sur un côté avant supérieur (26) de l'élément de liaison (20) est mise en engrènement avec un évidement (30) qui est prévu contre ou dans le bloc de refroidissement (12) ; **caractérisé en ce que** l'élément de liaison (20) vient se loger au sein de l'élément (13) faisant office de support en étant monté en mobilité dans la direction de son axe longitudinal ; et **en ce qu'**un côté avant inférieur (42) de l'élément de liaison (20) est sollicité avec un fluide mis sous pression, d'une manière telle que l'élément de liaison (20) est soumis à un déplacement à l'encontre de la mise en état de précontrainte par ressort dans la direction de son axe longitudinal, pour prendre une position de libération dans laquelle, entre la tête (28) de l'élément de liaison (20) et l'évidement (30) qui est prévu contre ou dans le bloc de refroidissement (12), on obtient un jeu (S), ce qui permet de démonter et par conséquent de libérer le bloc de refroidissement (12) par rapport à l'élément (13) faisant office de support.

15. Procédé selon la revendication 13 ou 14, qui est mis en oeuvre avec un système de serrage (10) selon l'une quelconque des revendications 1 à 12.
